# EUROPÄISCHE PATENTSCHRIFT

(11) **EP 4 217 630 B1**
(45) Veröffentlichungstag und Bekanntmachung des Hinweises auf die Patenterteilung: **09.10.2024**
(21) Anmeldenummer: 21762690.2
(22) Anmeldetag: 16.08.2021
(51) Int. Cl.: F16K 1/30, F16K 31/363, F16K 31/42, F17C 13/04

(54) **TANKVORRICHTUNG MIT EINER VENTILVORRICHTUNG**
TANK DEVICE WITH A VALVE DEVICE
DISPOSITIF À RÉSERVOIR DOTÉ D'UN DISPOSITIF SOUPAPE

(30) Priorität: 23.09.2020 DE 102020211860
(43) Veröffentlichungstag der Anmeldung: 02.08.2023
(73) Patentinhaber: Robert Bosch GmbH, 70442 Stuttgart (DE)
(72) Erfinder: SCHAICH, Udo, 70378 Stuttgart (DE)
(86) Internationale Anmeldenummer: PCT/EP2021/072763
(87) Internationale Veröffentlichungsnummer: WO 2022/063489

(56) Entgegenhaltungen:
- EP-A1- 0 668 468
- EP-B1- 0 668 468
- DE-A1- 102012 210 943
- US-B2- 10 161 360
- US-B2- 8 151 819

## Beschreibung

Die Erfindung betrifft eine Tankvorrichtung mit einer Ventilvorrichtung beispielsweise für ein Brennstoffzellensystem, insbesondere zur Speicherung von Wasserstoff, beispielsweise zur Anwendung in Fahrzeugen mit Brennstoffzellenantrieb.

### Stand der Technik

Die DE 10 2018 201 055 A1 beschreibt eine Tankvorrichtung mit mindestens zwei Speichereinheiten, welche jeweils ein Steuerventil aufweisen, und welche über ein Leitungssystem mit einer Ausgangsleitung verbunden sind. Dabei ist mindestens ein Steuerventil mindestens einer Speichereinheit als Hauptventil ausgebildet, und mindestens ein Steuerventil mindestens einer Speichereinheit ist als Nebenventil ausgebildet, wobei das Hauptventil und das Nebenventil unterschiedlich ausgebildet sind.

Die EP 0 668 468 B1 zeigt eine Tankvorrichtung zur Speicherung eines gasförmigen Mediums.

Die Sicherheitsvorrichtungen für solch eine Tankvorrichtung sind normiert. Dabei muss jede Tankvorrichtung solch ein Absperrventil aufweisen. So kann das Absperrventil bei einer Beschädigung der Tankvorrichtung hervorgerufen durch einen Unfall des Fahrzeugs, beispielsweise mit Brennstoffzellenantrieb, oder bei einem Bruch einer Leitung der Tankvorrichtung die Tankbehälter verschließen, so dass kein Gas aus der Tankvorrichtung austreten kann.

Aufgrund der hohen Sicherheitsanforderungen an die Absperrventile und aufgrund hoher Systemdrücke von beispielsweise 800 bar oder mehr sind solche Absperrventile konstruktiv sehr herausfordernd und weisen einen großen Bauraum auf. Dies erhöht wiederum das Gesamtgewicht der gesamten Tankvorrichtung, was im Falle eines Unfalls des Fahrzeugs, beispielsweise mit Brennstoffzellenantrieb, zu hohen auftretenden Beschleunigungskräften und möglichen Verformungen der Ventilvorrichtung oder der Tankvorrichtung führen kann.

### Vorteile der Erfindung

Die erfindungsgemäße Tankvorrichtung mit den kennzeichnenden Merkmalen des Anspruchs 1 weist demgegenüber den Vorteil auf, dass in konstruktiv einfacher und kostensparender Weise eine Tankvorrichtung zur Verfügung gestellt wird, welches ein kompakt ausgelegtes Sicherheitsventil mit geringen Öffnungskräften aufweist.

Dazu weist die Tankvorrichtung zur Speicherung eines gasförmigen Mediums, insbesondere Wasserstoff, für ein Brennstoffzellensystem eine Ventilvorrichtung und einen Tankbehälter auf. Die Ventilvorrichtung weist ein Ventilgehäuse auf, in welchem Ventilgehäuse ein entlang einer Längsachse der Ventilvorrichtung bewegliches Vorsteuerventilelement angeordnet ist. Das Vorsteuerventilelement wirkt zum Öffnen und Schließen einer ersten Durchgangsöffnung mit einem ersten Dichtsitz zusammen und bildet so ein Vorsteuerventil aus. Weiterhin umfasst die Ventilvorrichtung eine Magnetspule, durch welche Magnetspule das Vorsteuerventilelement entlang der Längsachse bewegbar ist. In dem Ventilgehäuse ist ein Hauptventilelement angeordnet, welches Hauptventilelement zum Öffnen und Schließen einer zweiten Durchgangsöffnung mit einem zweiten Dichtsitz zusammenwirkt und so ein Hauptventil ausbildet. Der zweite Dichtsitz ist als konischer Absatz an dem Ventilgehäuse ausgebildet ist. Darüber hinaus ist zwischen dem Ventilgehäuse und einer Anformung des Hauptventilelements, welche Anformung zum Öffnen und Schließen der zweiten Durchgangsöffnung mit dem zweiten Dichtsitz zusammenwirkt, ein Drosselkanal ausgebildet ist, welcher Drosselkanal entgegen der Richtung des zweiten Dichtsitzes eine konische Erweiterung aufweist, wodurch eine Drosselwirkung ausgebildet ist. Weiterhin ist die Ventilvorrichtung bei bestromter Magnetspule in Richtung des Tankbehälters öffenbar.

Weiterhin weist das Vorsteuerventilelement einen Absatz auf, an welchem Absatz sich eine Feder abstützt und das Vorsteuerventilelement mit einer Kraft in Richtung des einen Endes des Vorsteuerventilelements beaufschlagt. Bei Nicht-Bestromung der Magnetspule wirkt eine schließende Kraft auf das Vorsteuerventilelement und das Hauptventilelement über die Feder.

So kann in konstruktiv einfacher Weise eine optimale Ausbildung des magnetischen Flusses erzielt werden. Weiterhin ist durch den zweistufigen Öffnungsvorgang nur eine geringe magnetische Kraft für die Öffnung der Ventilvorrichtung notwendig. Dadurch wird ein geringer Strom- und Energiebedarf und damit eine positive Energiebilanz erzielt. Durch die Öffnung der Ventilvorrichtung bei Bestromung der Magnetspule in Richtung des Tankbehälters wird eine konstruktiv einfache und kostengünstige Tankvorrichtung erzielt.

In erster vorteilhafter Weiterbildung ist es vorgesehen, dass die zweite Durchgangsöffnung in dem Ventilgehäuse auf Höhe des Drosselkanals ausgebildet ist und in den Drosselkanal mündet. Vorteilhafterweise ist in dem Ventilgehäuse eine Kammer ausgebildet, welche Kammer mittels der zweiten Durchgangsöffnung mit dem Drosselkanal verbunden ist. So kann in konstruktiv einfacher Weise der Öffnungsvorgang der Ventilvorrichtung begünstigt werden.

In vorteilhafter Weiterbildung ist es vorgesehen, dass die Ventilvorrichtung in einem Halsbereich der Tankvorrichtung angeordnet und gegen einen Tankboden innerhalb des Halsbereichs gepresst ist. Aufgrund der konstruktiven Auslegung der Ventilvorrichtung innerhalb des Halsbereichs wird eine geringere Druckangriffsfläche erzielt, was geringere axiale Druckkräfte zur Folge hat. Bei hohen Drücken stellen geringere Druckangriffsflächen eine hohe Entlastung bezüglich Bauteilbelastungen dar, was sich in geringeren Verformungen, weniger Verschleiß und Dichtheitseinflüssen und einer erhöhten Lebensdauer der gesamten Tankvorrichtung und der Ventilvorrichtung widerspiegelt.

In weiterer Ausgestaltung der Erfindung ist es vorteilhaft vorgesehen, dass in dem Tankboden eine Entnahmeöffnung ausgebildet ist, welche einen Tankbehälterinnenraum und die Kammer fluidisch miteinander verbindet. So kann das Innere der Ventilvorrichtung in einfacher Weise mit einem Tankinnenraum der Tankvorrichtung verbunden werden.

In vorteilhafter Weise ist der erste Dichtsitz an dem Hauptventilelement ausgebildet.

In weiterer Ausgestaltung der Erfindung ist es vorteilhaft vorgesehen, dass das Hauptventilelement mittels einer Feder mit einer Kraft in Richtung des Tankbehälterinnenraums beaufschlagt ist, wodurch das Hauptventilelement mit einer Kraft in Richtung des ersten Dichtsitzes und entgegen der Richtung des zweiten Dichtsitzes beaufschlagt ist.

In vorteilhafter Weiterbildung ist es vorgesehen, dass in dem Ventilgehäuse ein Innenraum ausgebildet ist, welcher Innenraum durch das Hauptventilelement in einen ersten Teilinnenraum und einen zweiten Teilinnenraum aufgeteilt ist.

In weiterer Ausgestaltung der Erfindung ist es vorteilhaft vorgesehen, dass der erste Teilinnenraum mittels eines in dem Ventilgehäuse ausgebildeten Absteuerkanals mit einer Zulaufleitung verbunden ist, welche Zulaufleitung mit einem Zulaufbereich eines Verbrauchersystems, insbesondere einem Anodenbereich eines Brennstoffzellensystems, verbindbar ist.

Dadurch wird ein Öffnungsvorgang der Ventilvorrichtung begünstigt, welcher geringe magnetische Kräfte benötigt, da der Öffnungsvorgang aufgrund der konstruktiven Auslegung der Ventilvorrichtung durch pneumatische Kräfte unterstützt wird.

In vorteilhafter Weiterbildung ist es vorgesehen, dass der erste Teilinnenraum und der zweite Teilinnenraum mittels des ersten Dichtsitzes und/oder des zweiten Dichtsitzes fluidisch verbindbar sind.

Die beschriebene Tankvorrichtung eignet sich vorzugsweise in einem Brennstoffzellensystem zur Speicherung von Wasserstoff für den Betrieb einer Brennstoffzelle.

Die beschriebene Tankvorrichtung zur Speicherung von Wasserstoff für den Betrieb einer Brennstoffzelle eignet sich weiterhin vorteilhaft in einem brennstoffzellenbetriebenen Fahrzeug.

### Zeichnungen

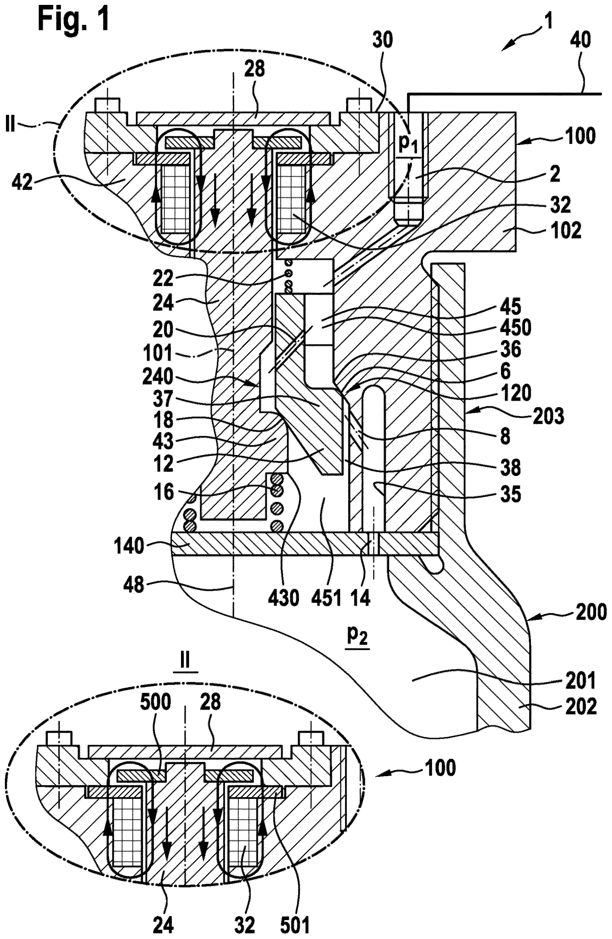

In der Zeichnung sind Ausführungsbeispiele einer erfindungsgemäßen Tankvorrichtung zur Speicherung eines gasförmigen Mediums, insbesondere Wasserstoff, dargestellt. Es zeigt in
- Fig. 1: ein Ausführungsbeispiel einer erfindungsgemäßen Tankvorrichtung mit einer Ventilvorrichtung im Längsschnitt,

### Beschreibung des Ausführungsbeispiels

**Fig.1** zeigt ein Ausführungsbeispiel einer erfindungsgemäßen Tankvorrichtung 1 mit einer Längsachse 48 im Längsschnitt und in vereinfachter Ansicht, wobei die Tankvorrichtung 1 rotationssymmetrisch um die Längsachse 48 ausgebildet ist.

Die Tankvorrichtung 1 weist einen Tankbehälter 200 und eine Ventilvorrichtung 100 auf, wobei die Ventilvorrichtung 1 teilweise in dem Tankbehälter 200 aufgenommen ist. Der Tankbehälter 200 weist ein Tankbehältergehäuse 202 auf, in dem ein Tankbehälterinnenraum 201 ausgebildet ist.

Weiterhin weist der Tankbehälter 200 einen Halsbereich 203 auf, in dem die Ventilvorrichtung 100 teilweise aufgenommen ist. Dabei stützt sich die Ventilvorrichtung 100 an einem Tankboden 140 ab, welcher zwischen dem Halsbereich 203 und dem Tankbehälterinnenraum 201 angeordnet und so der Tankbehälterinnenraum 201 von dem Halsbereich 203 abgegrenzt ist.

Die Ventilvorrichtung 100 weist ein Ventilgehäuse 102 auf, in dem eine Magnetspule 32 angeordnet ist, welche mittels eines elektrischen Anschlusses 30 mit Strom versorgbar ist. Dabei ist die Durchführung des elektrischen Anschlusses 30 in einem magnetisierbaren Gehäusedeckel 28 ausgebildet.

Außerdem ist der Gehäusedeckel 28 hier aus einem nicht-magnetischen Material hergestellt, um die Kraftfelder und damit die Bewegungsrichtung des Vorsteuerventilelements 24 in Richtung des Tankbehälterinnenraums 201 zu führen. Die Magnetspule 32 ist mittels eines Klemmrings 501 an dem Ventilgehäuse 102 befestigt. In einer alternativen Ausführung, wie im Bereich II gezeigt, kann an dem Vorsteuerventilelement 24 eine Magnetscheibe 500 angeordnet sein.

Weiterhin ist in dem Ventilgehäuse 102 ein Innenraum 45 ausgebildet, in dem ein Vorsteuerventilelement 24 und ein Hauptventilelement 12 angeordnet ist.

Das Vorsteuerventilelement 24 ist koaxial zu der Längsachse 48 angeordnet und weist stufenförmige Ausnehmungen und einen abgerundeten Absatz 43 auf, welcher an einem gegenüberliegenden Ende als Stufe 430 ausgebildet ist. An dieser Stufe 430 stützt sich eine Feder 16 ab, welche sich ebenfalls an dem Tankboden 140 abstützt und das Vorsteuerventilelement 24 mit einer Kraft in Richtung der Magnetspule 32 - in der **Fig.1** nach oben - beaufschlagt und damit mit einer Kraft in Richtung eines Endes 42 des Vorsteuerventilelements 24 beaufschlagt.

Parallel zu dem Vorsteuerventilelement 24 ist ein Hauptventilelement 12 angeordnet, welches im Wesentlichen L-förmig mit einer Anformung 37 ausgebildet ist. Zusätzlich weist das Hauptventilelement 12 eine erste Durchgangsöffnung 20 auf, durch welche ein erster Teilinnenraum 450 und ein zweiter Teilinnenraum 451 fluidisch verbindbar sind. Der Innenraum 45 ist durch das Hauptventilelement 12 in den ersten Teilinnenraum 450 und den zweiten Teilinnenraum 451 geteilt.

Das Hauptventilelement 12 ist durch eine Feder 22 vorgespannt und wird durch diese gegen den abgerundeten Absatz 43 gedrückt, wobei sich die Feder 22 an dem Ventilgehäuse 102 abstützt. An dem Hauptventilelement 12 ist somit ein erster Dichtsitz 18 ausgebildet, welcher zusammen mit dem Hauptventilelement 12 zum Öffnen und Schließen einer Verbindung zwischen dem ersten Teilinnenraum 450 und dem zweiten Teilinnenraum 451 und damit zum Öffnen und Schlie-ßen der ersten Durchgangsöffnung 20 zusammenwirkt und so ein Vorsteuerventil 240 ausbildet.

Durch das Vorsteuerventilelement 24 wird das Hauptventilelement 12 mit einer Kraft entgegen der Kraft der Feder 22 beaufschlagt und so mit seiner Anformung 37 gegen einen an dem Ventilgehäuse 102 konisch ausgebildeten zweiten Dichtsitz 6 gedrückt. Die schließende Kraft wird dabei durch den Druck im Tankbehälterinnenraum 201 und die Kraft der Feder 16 unterstützt. Die schließende Kraft sorgt im ausgeschalteten und nicht bestromten Zustand für ein sicheres Schlie-ßen des Hauptventilelements 12. Dadurch wirkt das Hauptventilelement 12 zum Öffnen und Schließen einer in dem Ventilgehäuse 102 ausgebildeten zweiten Durchgangsöffnung 8 mit dem zweiten Dichtsitz 6 zusammen und bildet so ein Hauptventil 120 aus.

Zwischen dem Ventilgehäuse 102 und der Anformung 37 des Hauptventilelements 12 ist ein Drosselkanal 38 ausgebildet, welcher entgegen der Richtung des zweiten Dichtsitzes 6 eine konische Erweiterung aufweist, wodurch eine Drosselwirkung ausgebildet ist.

Die zweite Durchgangsöffnung 8 ist auf Höhe des Drosselkanals 38 ausgebildet und mündet in den Drosselkanal 38. Weiterhin mündet die zweite Durchgangsöffnung 8 in eine in dem Ventilgehäuse 102 ausgebildete Kammer 35, welche über in dem Tankboden 140 ausgebildete Entnahmeöffnungen 14 mit dem Tankbehälterinnenraum 201 verbunden ist.

Der erste Teilinnenraum 450 ist mittels eines in dem Ventilgehäuse 102 ausgebildeten Absteuerkanals 2 mit einer Zulaufleitung 40 verbunden, welche mit einem Anodenbereich eines Brennstoffzellensystems verbindbar ist. Im Absteuerkanal 2 bildet sich der Systemdruck p₁ aus.

Die Funktionsweise der Tankvorrichtung 1 ist wie folgt: In unbestromten Zustand der Magnetspule 32 sind der erste Dichtsitz 18 und der zweite Dichtsitz 6 geschlossen, so dass kein gasförmiges Medium, hier Wasserstoff, aus dem Tankbehälterinnenraum 202 über die Ventilvorrichtung 100 in die Zulaufleitung 40 in Richtung des Anodenbereichs des Brennstoffzellensystems strömen kann.

Bei einer Bestromung der Magnetspule 32 über den elektrischen Anschluss 30 bildet sich ein magnetisches Feld, was zu einer magnetischen Kraftwirkung zwischen dem Vorsteuerventilelement 24 bzw. der Magnetscheibe 500 und dem Klemmring 501 führt. Bei ausreichend sich zueinander anziehenden Magnetkräften bewegt sich das Vorsteuerventilelement 24 von dem Gehäusedeckel 28 weg und drückt so die Feder 16 zusammen. Durch die Längsbewegung des Vorsteuerventilelements 24 hebt dieses von dem ersten Dichtsitz 18 ab und gibt so einen Öffnungsquerschnitt von dem zweiten Teilinnenraum 451 in den ersten Teilinnenraum 450 und die erste Durchgangsöffnung 20 frei.

Über die Entnahmeöffnung 14, die Kammer 35, die zweite Durchgangsöffnung 8 und den Drosselkanal 38 ist der zweite Teilinnenraum 451 fluidisch mit dem Tankbehälterinnenraum 201 verbunden, so dass dieser mit Wasserstoff befüllt ist. Durch das Abströmen des Wasserstoffs in Richtung des Absteuerkanals 2 und damit in die Zulaufleitung 40 bildet sich je nach Mediumabnahme durch das Drucksystem ein ausgleichendes Druckniveau um das Hauptventilelement 12 aus.

Durch die konstruktive Ausgestaltung des Drosselkanals 38 als Drossel wird während des Öffnungsvorgangs mehr Medium, hier Wasserstoff, über die erste Durchgangsöffnung 20 abfließen als über den Drosselkanal 38 nachströmen kann. Auf diese Weise wirkt eine zusätzliche öffnende Kraft auf das Hauptventilelement 12. Zudem wird der Druck im zweiten Teilinnenraum 451 abgesenkt.

Nach kurzer Öffnungszeit des ersten Dichtsitzes 18 ist das Vorsteuerventilelement 24 druckausgeglichen, was zu einer Druckausgeglichenheit des Hauptventilelements 12 führt.

Die Kraft der Feder 22 unterstützt die Freigabe des zweiten Dichtsitzes 6, da diese das Hauptventilelement 12 in Öffnungskraft drückt, so dass das Hauptventilelement 12 von dem zweiten Dichtsitz 6 abhebt und ein Öffnungsquerschnitt zwischen der zweiten Durchgangsöffnung 8 und dem ersten Teilinnenraum 450 freigibt. So strömt nun Wasserstoff aus dem Tankbehälterinnenraum 201 über die zweite Durchgangsöffnung 8 direkt in den ersten Teilinnenraum 450 in Richtung des Absteuerkanals 2 und damit in die Zulaufleitung 40.

So sind nun der erste Dichtsitz 18 und der zweite Dichtsitz 6 freigegeben und über beide Öffnungsquerschnitte strömt Wasserstoff aus dem Tankbehälterinnenraum 201 über die Ventilvorrichtung 1 in die Zulaufleitung 40 in Richtung des Anodenbereichs des Brennstoffzellensystems.

Ist der Öffnungsquerschnitt an dem ersten Dichtsitz 18 kleiner als der Öffnungsquerschnitt an dem zweiten Dichtsitz 6, so werden lediglich geringe magnetische Kräfte für den Öffnungsvorgang des Vorsteuerventilelements 24 an dem ersten Dichtsitz 18 benötigt.

Wird die Bestromung der Magnetspule 32 unterbrochen, so bricht das magnetische Feld zusammen und eine schließende Kraft auf das Vorsteuerventilelement 24 und das Hauptventilelement 12 wird über die Feder 16 eingeleitet. Je nach anstehendem Druck p₂, wie beispielsweise 15 bis 1000 bar, im Tankbehälterinnenraum 201 wird die schließende Kraft zusammen mit dem Druck im Halsbereich 203 der Tankvorrichtung 1 über das Vorsteuerventilelement 24 und dem ersten Dichtsitz 18 zum Hauptventilelement 12 mit dem zweiten Dichtsitz 6 eingeleitet.

Sowohl der erste Dichtsitz 18 als auch der zweite Dichtsitz 6 sind nun wieder gesperrt, sodass kein Wasserstoff mehr aus dem Tankbehälterinnenraum 201 über die Ventilvorrichtung 100 in Richtung des Anodenbereichs des Brennstoffzellensystems strömen kann. Dieses Prinzip des selbstständigen Verschließens funktioniert auch bei einem Notfall, wenn die Stromzufuhr unterbrochen wird. Hierbei gilt es jedoch zu beachten, dass die Kraft der Feder 22, welche entgegen dem gewünschten Kraftfluss wirkt, nicht zu hoch gewählt werden darf und entsprechend abgestimmt sein muss. So wird in einem Notfall sichergestellt, dass kein Wasserstoff aus der Tankvorrichtung 1 entweichen kann.

Im Betankungsfall wird der Absteuerkanal 2 über eine angeschlossene Tankeinheit, beispielsweise eine Tankstelle, mit Druck versorgt. Dabei ist der anstehende Druck im Absteuerkanal 2 größer als in der restlichen Ventilvorrichtung 100. Durch das unterschiedliche Druckniveau ist das Druckverhältnis am zweiten Dichtsitz 6 größer als in der restlichen Ventilvorrichtung 100, so dass das Hauptventilelement 12 das Vorsteuerventilelement 24 entgegen der Kraft der Feder 16 in Richtung des Tankbehälterinnenraums 201 drückt. Die Tankvorrichtung 1 kann nun über den freigegebenen zweiten Dichtsitz 6 und über die zweite Durchgangsöffnung 8 befüllt werden bis der Tankvorgang abgeschlossen ist. Wird der Tankvorgang beendet, findet kein weiteres Befüllen statt, sodass sich der Druck um das Hauptventilelement 12 ausgleicht. Die Kraft der Feder 16 zusammen mit dem sich einstellenden Differenzdruck aus p₂ > p₁ sorgt wieder für ein Verschlie-ßen des ersten Dichtsitzes 18 und des zweiten Dichtsitzes 6.

Die Tankvorrichtung 1 zur Speicherung eines gasförmigen Mediums kann neben brennstoffzellenbetriebenen Fahrzeugen beispielsweise auch zur Wasserstoff-Speicherung in Fahrzeugen mit einem Wasserstoff-Verbrenner als Antrieb verwendet werden.

## Patentansprüche

1. Tankvorrichtung (1) zur Speicherung eines gasförmigen Mediums, insbesondere Wasserstoff, mit einer Ventilvorrichtung (100) und einem Tankbehälter (200), wobei die Ventilvorrichtung (100) ein Ventilgehäuse (102) aufweist, in welchem Ventilgehäuse (102) ein entlang einer Längsachse (101) der Ventilvorrichtung (100) bewegliches Vorsteuerventilelement (24) angeordnet ist, welches Vorsteuerventilelement (24) zum Öffnen und Schließen einer ersten Durchgangsöffnung (20) mit einem ersten Dichtsitz (18) zusammenwirkt und so ein Vorsteuerventil (240) ausbildet, wobei die Ventilvorrichtung (2) eine Magnetspule (32) umfasst, durch welche Magnetspule (32) das Vorsteuerventilelement (24) entlang der Längsachse (101) bewegbar ist, wobei in dem Ventilgehäuse (102) ein Hauptventilelement (12) angeordnet ist, welches Hauptventilelement (12) zum Öffnen und Schließen einer zweiten Durchgangsöffnung (8) mit einem zweiten Dichtsitz (6) zusammenwirkt und so ein Hauptventil (120) ausbildet, wobei der zweite Dichtsitz (6) als konischer Absatz (36) an dem Ventilgehäuse (102) ausgebildet ist, **dadurch gekennzeichnet, dass** zwischen dem Ventilgehäuse (102) und einer Anformung (37) des Hauptventilelements (12), welche Anformung (37) zum Öffnen und Schließen der zweiten Durchgangsöffnung (8) mit dem zweiten Dichtsitz (6) zusammenwirkt, ein Drosselkanal (38) ausgebildet ist, welcher Drosselkanal (38) entgegen der Richtung des zweiten Dichtsitzes (6) eine konische Erweiterung aufweist, wodurch eine Drosselwirkung ausgebildet ist, wobei die Ventilvorrichtung (2) bei bestromter Magnetspule (32) in Richtung des Tankbehälters (200) öffenbar ist, wobei das Vorsteuerventilelement (24) einen Absatz (43) aufweist, an welchem Absatz (43) sich eine Feder (16) abstützt und das Vorsteuerventilelement (24) mit einer Kraft in Richtung des einen Endes (42) des Vorsteuerventilelements (24) beaufschlagt, wobei bei Nicht-Bestromung der Magnetspule (32) eine schließende Kraft auf das Vorsteuerventilelement (24) und das Hauptventilelement (12) über die Feder (16) wirkt.

2. Tankvorrichtung (1) nach Anspruch 1, **dadurch gekennzeichnet, dass** die zweite Durchgangsöffnung (8) in dem Ventilgehäuse (102) auf Höhe des Drosselkanals (38) ausgebildet ist und in den Drosselkanal (38) mündet.

3. Tankvorrichtung (1) nach Anspruch 2, **dadurch gekennzeichnet, dass** in dem Ventilgehäuse (102) eine Kammer (35) ausgebildet ist, welche Kammer (35) mittels der zweiten Durchgangsöffnung (8) mit dem Drosselkanal (38) verbunden ist.

4. Tankvorrichtung (1) nach dem vorhergehenden Anspruch, **dadurch gekennzeichnet, dass** die Ventilvorrichtung (100) in einem Halsbereich (203) der Tankvorrichtung (1) angeordnet und gegen einen Tankboden (140) innerhalb des Halsbereichs (203) gepresst ist.

5. Tankvorrichtung (1) nach dem vorhergehenden Anspruch, **dadurch gekennzeichnet, dass** in dem Tankboden (140) eine Entnahmeöffnung (14) ausgebildet ist, welche einen Tankbehälterinnenraum (201) und die Kammer (35) fluidisch miteinander verbindet.

6. Tankvorrichtung (1) nach einem der vorhergehenden Ansprüche, **dadurch gekennzeichnet, dass** der erste Dichtsitz (18) an dem Hauptventilelement (12) ausgebildet ist.

7. Tankvorrichtung (1) nach einem der vorhergehenden Ansprüche, **dadurch gekennzeichnet, dass** das Hauptventilelement (12) mittels einer Feder (22) mit einer Kraft in Richtung des Tankbehälterinnenraums (201) beaufschlagt ist, wodurch das Hauptventilelement (12) mit einer Kraft in Richtung des ersten Dichtsitzes (18) und entgegen der Richtung des zweiten Dichtsitzes (6) beaufschlagt ist.

8. Tankvorrichtung (1) nach einem der vorhergehenden Ansprüche, **dadurch gekennzeichnet, dass** in dem Ventilgehäuse (102) ein Innenraum (45) ausgebildet ist, welcher Innenraum (45) durch das Hauptventilelement (12) in einen ersten Teilinnenraum (450) und einen zweiten Teilinnenraum (451) aufgeteilt ist.

9. Tankvorrichtung (1) nach dem vorhergehenden Anspruch, **dadurch gekennzeichnet, dass** der erste Teilinnenraum (450) mittels eines in dem Ventilgehäuse (102) ausgebildeten Absteuerkanals (2) mit einer Zulaufleitung (40) verbunden ist, welche Zulaufleitung (40) mit einem Zulaufbereich eines Verbrauchersystems, insbesondere einem Anodenbereich eines Brennstoffzellensystems, verbindbar ist.

10. Tankvorrichtung (1) nach einem der vorhergehenden Ansprüche, **dadurch gekennzeichnet, dass** der erste Teilinnenraum (450) und der zweite Teilinnenraum (451) mittels des ersten Dichtsitzes (18) und/oder des zweiten Dichtsitzes (6) fluidisch verbindbar sind.

11. Brennstoffzellensystem mit einer Tankvorrichtung (1) zur Speicherung von Wasserstoff für den Betrieb einer Brennstoffzelle nach einem der Ansprüche 1 bis 10.

12. Brennstoffzellenbetriebenes Fahrzeug mit einer Tankvorrichtung (1) zur Speicherung von Wasserstoff für den Betrieb einer Brennstoffzelle nach einem der Ansprüche 1 bis 10.

## Claims

1. Tank device (1) for storing a gaseous medium, in particular hydrogen, having a valve device (100) and a tank (200), wherein the valve device (100) has a valve housing (102), in which valve housing (102) a pilot control valve element (24) which is movable along a longitudinal axis (101) of the valve device (100) is arranged, which pilot control valve element (24) interacts with a first sealing seat (18) in order to open and close a first passage opening (20) and thus forms a pilot control valve (240), wherein the valve device (2) comprises a solenoid coil (32), by means of which solenoid coil (32) the pilot control valve element (24) is movable along the longitudinal axis (101), wherein a main valve element (12) is arranged in the valve housing (102), which main valve element (12) interacts with a second sealing seat (6) in order to open and close a second passage opening (8) and thus forms a main valve (120), wherein the second sealing seat (6) is in the form of a conical shoulder (36) on the valve housing (102), **characterized in that** a throttle channel (38) is formed between the valve housing (102) and a protuberance (37) of the main valve element (12), which protuberance (37) interacts with the second sealing seat (6) in order to open and close the second passage opening (8), which throttle channel (38) has a conical widening counter to the direction of the second sealing seat (6), thus forming a throttle effect, wherein, when the solenoid coil (32) is energized, the valve device (2) can be opened in the direction of the tank (200), wherein the pilot control valve element (24) has a shoulder (43), on which shoulder (43) a spring (16) is supported and acts upon the pilot control valve element (24) with a force in the direction of the one end (42) of the pilot control valve element (24), wherein, when the solenoid coil (32) is not energized, a closing force acts on the pilot control valve element (24) and the main valve element (12) via the spring (16).

2. Tank device (1) according to Claim 1, **characterized in that** the second passage opening (8) in the valve housing (102) is formed level with the throttle channel (38) and opens into the throttle channel (38).

3. Tank device (1) according to Claim 2, **characterized in that** a chamber (35) is formed in the valve housing (102), which chamber (35) is connected to the throttle channel (38) by means of the second passage opening (8).

4. Tank device (1) according to the preceding claim, **characterized in that** the valve device (100) is arranged in a neck region (203) of the tank device (1) and is pressed against a tank base (140) within the neck region (203).

5. Tank device (1) according to the preceding claim, **characterized in that** in the tank base (140) a removal opening (14) is formed which connects a tank interior (201) and the chamber (35) fluidically to each other.

6. Tank device (1) according to one of the preceding claims, **characterized in that** the first sealing seat (18) is formed on the main valve element (12).

7. Tank device (1) according to one of the preceding claims, **characterized in that** the main valve element (12) is acted upon with a force in the direction of the tank interior (201) by means of a spring (22), as a result of which the main valve element (12) is acted upon with a force in the direction of the first sealing seat (18) and counter to the direction of the second sealing seat (6).

8. Tank device (1) according to one of the preceding claims, **characterized in that** an interior space (45) is formed in the valve housing (102), which interior space (45) is divided into a first partial interior space (450) and a second partial interior space (451) by the main valve element (12).

9. Tank device (1) according to the preceding claim, **characterized in that** the first partial interior space (450) is connected by means of a spill channel (2) formed in the valve housing (102) to a feed line (40), which feed line (40) is connectable to a feed region of a load system, in particular an anode region of a fuel cell system.

10. Tank device (1) according to one of the preceding claims, **characterized in that** the first partial interior space (450) and the second partial interior space (451) are fluidically connectable by means of the first sealing seat (18) and/or the second sealing seat (6).

11. Fuel cell system having a tank device (1) for storing hydrogen for the operation of a fuel cell according to one of Claims 1 to 10.

12. Fuel-cell-operated vehicle having a tank device (1) for storing hydrogen for the operation of a fuel cell according to one of Claims 1 to 10.

## Revendications

1. Dispositif de réservoir (1) pour le stockage d'un milieu gazeux, notamment d'hydrogène, avec un dispositif de soupape (100) et un récipient de réservoir (200), le dispositif de soupape (100) présentant un boîtier de soupape (102), dans lequel boîtier de soupape (102) est agencé un élément de soupape de pilotage (24) mobile le long d'un axe longitudinal (101) du dispositif de soupape (100), lequel élément de soupape de pilotage (24) coopère avec un premier siège d'étanchéité (18) pour ouvrir et fermer une première ouverture de passage (20) et réalise ainsi une soupape de pilotage (240), le dispositif de soupape (2) comprenant une bobine magnétique (32), par laquelle bobine magnétique (32) l'élément de soupape de pilotage (24) peut être déplacé le long de l'axe longitudinal (101), un élément de soupape principal (12) étant agencé dans le boîtier de soupape (102), lequel élément de soupape principal (12) coopère avec un deuxième siège d'étanchéité (6) pour ouvrir et fermer une deuxième ouverture de passage (8) et réalise ainsi une soupape principale (120), le deuxième siège d'étanchéité (6) étant réalisé sous forme d'épaulement conique (36) sur le boîtier de soupape (102), **caractérisé en ce qu'**entre le boîtier de soupape (102) et une formation (37) de l'élément de soupape principal (12), laquelle formation (37) coopère avec le deuxième siège d'étanchéité (6) pour ouvrir et fermer la deuxième ouverture de passage (8), un canal d'étranglement (38) est réalisé, lequel canal d'étranglement (38) présente un élargissement conique à l'encontre de la direction du deuxième siège d'étanchéité (6), ce qui permet de réaliser un effet d'étranglement, le dispositif de soupape (2) pouvant être ouvert en direction du récipient de réservoir (200) lorsque la bobine magnétique (32) est alimentée, l'élément de soupape de pilotage (24) présentant un épaulement (43), un ressort (16) s'appuyant sur ledit épaulement (43) et sollicitant l'élément de soupape de pilotage (24) avec une force en direction de l'une des extrémités (42) de l'élément de soupape de pilotage (24), une force de fermeture agissant sur l'élément de soupape de pilotage (24) et l'élément de soupape principal (12) par l'intermédiaire du ressort (16) lorsque la bobine magnétique (32) n'est pas alimentée.

2. Dispositif de réservoir (1) selon la revendication 1, **caractérisé en ce que** la deuxième ouverture de passage (8) est réalisée dans le boîtier de soupape (102) à hauteur du canal d'étranglement (38) et débouche dans le canal d'étranglement (38).

3. Dispositif de réservoir (1) selon la revendication 2, **caractérisé en ce qu'**une chambre (35) est réalisée dans le boîtier de soupape (102), laquelle chambre (35) est reliée au canal d'étranglement (38) au moyen de la deuxième ouverture de passage (8).

4. Dispositif de réservoir (1) selon la revendication précédente, **caractérisé en ce que** le dispositif de soupape (100) est agencé dans une zone de col (203) du dispositif de réservoir (1) et est pressé contre un fond de réservoir (140) à l'intérieur de la zone de col (203).

5. Dispositif de réservoir (1) selon la revendication précédente, **caractérisé en ce qu'**une ouverture de prélèvement (14) est réalisée dans le fond de réservoir (140), laquelle ouverture relie fluidiquement un espace intérieur de récipient de réservoir (201) et la chambre (35).

6. Dispositif de réservoir (1) selon l'une quelconque des revendications précédentes, **caractérisé en ce que** le premier siège d'étanchéité (18) est réalisé sur l'élément de soupape principal (12).

7. Dispositif de réservoir (1) selon l'une quelconque des revendications précédentes, **caractérisé en ce que** l'élément de soupape principal (12) est sollicité avec une force en direction de l'espace intérieur de récipient de réservoir (201) au moyen d'un ressort (22), moyennant quoi l'élément de soupape principal (12) est sollicité avec une force en direction du premier siège d'étanchéité (18) et à l'encontre de la direction du deuxième siège d'étanchéité (6).

8. Dispositif de réservoir (1) selon l'une quelconque des revendications précédentes, **caractérisé en ce qu'**un espace intérieur (45) est réalisé dans le boîtier de soupape (102), lequel espace intérieur (45) est divisé par l'élément de soupape principal (12) en un premier espace intérieur partiel (450) et un deuxième espace intérieur partiel (451).

9. Dispositif de réservoir (1) selon la revendication précédente, **caractérisé en ce que** le premier espace intérieur partiel (450) est relié à une conduite d'alimentation (40) au moyen d'un canal de commande (2) réalisé dans le boîtier de soupape (102), laquelle conduite d'alimentation (40) peut être reliée à une zone d'alimentation d'un système consommateur, notamment une zone d'anode d'un système de pile à combustible.

10. Dispositif de réservoir (1) selon l'une quelconque des revendications précédentes, **caractérisé en ce que** le premier espace intérieur partiel (450) et le deuxième espace intérieur partiel (451) peuvent être reliés fluidiquement au moyen du premier siège d'étanchéité (18) et/ou du deuxième siège d'étanchéité (6).

11. Système de pile à combustible avec un dispositif de réservoir (1) pour le stockage d'hydrogène pour l'exploitation d'une pile à combustible selon l'une quelconque des revendications 1 à 10.

12. Véhicule alimenté par pile à combustible avec un dispositif de réservoir (1) pour le stockage d'hydrogène pour l'exploitation d'une pile à combustible selon l'une quelconque des revendications 1 à 10.
